# EUROPEAN PATENT APPLICATION

(11) **EP 4 804 662 A1**
(43) Date of publication of application: **09.09.2026**
(21) Application number: 23957416.3
(22) Date of filing: 10.11.2023
(51) Int. Cl.: H04W 64/00

(54) **WIRELESS COMMUNICATION METHOD AND COMMUNICATION DEVICE**

(30) Priority: 03.11.2023 WO PCT/CN2023/129811
(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/131063
(87) International publication number: WO 2025/091561

(57) **Abstract**

A wireless communications method and device are provided. The method includes: sending first information by a first communications device. A difference between a moment at which the first communications device receives a first positioning signal and a moment at which that sends a second positioning signal is a first time difference, a time period for transmitting the first positioning signal corresponds to a first TA, a time period for transmitting the second positioning signal corresponds to a second TA, the first information is related to the first time difference, and also the first TA and/or the second TA. The first information involves not only the first time difference but also the first TA and/or second TA. Therefore, even if the first TA is different from the second TA, positioning inaccuracy caused from the difference between the first TA and second TA can be corrected based on the first information.

## Description

The present application is a continuation of PCT Patent Application No. PCT/CN2023/129811, entitled "WIRELESS COMMUNICATIONS METHOD, AND COMMUNICATIONS DEVICE" filed on November 3, 2023, which is incorporated by reference herein in its entirety.

### TECHNICAL FIELD

This application relates to the technical field of communications, and more specifically, to a wireless communications method, and a communications device.

### BACKGROUND

In a communications system, a terminal device can be located based on round trip time (RTT). In a non-terrestrial network (NTN) system, the RTT can be calculated through the transmission of an uplink (UL) positioning signal and a downlink (DL) positioning signal between a satellite and the terminal device. Based on the calculated RTT, the communications device can determine the distance between the terminal device and the satellite. Furthermore, the communications device can locate the terminal device based on this distance. There is room for improvement in RTT-based positioning for both terrestrial network (TN) systems and NTN systems.

### SUMMARY

The present application provides a wireless communications method and a communications device. The following introduces various aspects of the present application.

In a first aspect, a wireless communications method is provided. The method includes: sending, by a first communications device, first information, where a difference between a moment at which the first communications device receives a first positioning signal and a moment at which the first communications device sends a second positioning signal is a first time difference, a time advance (TA) corresponding to a time period for transmitting the first positioning signal is a first TA, a TA corresponding to a time period for transmitting the second positioning signal is a second TA, the first information is related to the first time difference, and the first information is further related to the first TA and/or the second TA.

In a second aspect, a wireless communications method is provided. The method includes: receiving, by a second communications device, first information transmitted by a first communications device, where a difference between a moment at which the first communications device receives a first positioning signal and a moment at which the first communications device sends a second positioning signal is a first time difference, a TA corresponding to a time period for transmitting the first positioning signal is a first TA, a TA corresponding to a time period for transmitting the second positioning signal is a second TA, the first information is related to the first time difference, and the first information is further related to the first TA and/or the second TA.

In a third aspect, a communications device is provided. The communications device is a first communications device, and the communications device includes: a sending unit, configured to transmit first information, where a difference between a moment at which the first communications device receives a first positioning signal and a moment at which the first communications device sends a second positioning signal is a first time difference, a TA corresponding to a time period for transmitting the first positioning signal is a first TA, a TA corresponding to a time period for transmitting the second positioning signal is a second TA, the first information is related to the first time difference, and the first information is further related to the first TA and/or the second TA.

In a fourth aspect, a communications device is provided. The communications device is a second communications device, and the communications device includes: a receiving unit, configured to receive first information sent by a first communications device, where a difference between a moment at which the first communications device receives a first positioning signal and a moment at which the first communications device sends a second positioning signal is a first time difference, a TA corresponding to a time period for transmitting the first positioning signal is a first TA, a TA corresponding to a time period for transmitting the second positioning signal is a second TA, the first information is related to the first time difference, and the first information is further related to the first TA and/or the second TA.

In a fifth aspect, a communications device is provided, including a processor and a memory. The memory is configured to store one or more computer programs, and the processor is configured to invoke the computer program in the memory so that the communications device performs part or all of the steps in the method of the first aspect and/or the second aspect.

In a sixth aspect, a communications system is provided according to an embodiment of the present application. The communications system includes the above-mentioned communications device. In other embodiments, the system may also include other devices that interact with the communications device in the solution according to the embodiments of the present application.

In the seventh aspect, a computer-readable storage medium is provided according to an embodiment of the present application. The computer-readable storage medium stores a computer program, and the computer program enables a communications device to perform part or all of the steps in the method in the above aspects.

In an eighth aspect, a computer program product is provided according to an embodiment of the present application. The computer program product includes a nontransitory computer-readable storage medium storing a computer program, and the computer program is operable to cause a communications device to perform some or all of the steps in the method in the above aspects. In some embodiments, the computer program product is a software installation package.

In a ninth aspect, a chip comprising a memory and a processor is provided according to an embodiment of the present application. The processor can invoke a computer program from the memory and run the computer program to implement some or all of the steps in the method in the above aspects.

It is found that in certain scenarios, the first TA may differ from the second TA, which may lead to anomalies in RTT positioning. To address this, the present application proposes a technical solution in which the first communications device needs to report first information. The first information takes into account not only the first time difference but also the first TA and/or second TA. Therefore, even if the first TA is different from the second TA, the positioning inaccuracies caused by the difference between the first TA and second TA can be corrected to some extent based on the first information.

### BRIEF DESCRIPTION OF THE DRAWINGS

FIG. 1 is a schematic diagram of a wireless communications system applied in the embodiments of the present application.
FIG. 2 is a schematic diagram of a method for RTT positioning.
FIG. 3 is a schematic diagram of a multi-RTT positioning scenario.
FIG. 4 is a schematic timing diagram for receiving a first positioning signal and transmitting a second positioning signal.
FIG. 5 is another schematic timing diagram for receiving the first positioning signal and transmitting the second positioning signal.
FIG. 6 is another schematic timing diagram for receiving the first positioning signal and transmitting the second positioning signal.
FIG. 7 is a schematic flowchart of a wireless communications method according to an embodiment of the present application.
FIG. 8 is another schematic timing diagram for receiving the first positioning signal and transmitting the second positioning signal.
FIG. 9 is another schematic timing diagram for receiving the first positioning signal and transmitting the second positioning signal.
FIG. 10 is another schematic timing diagram for receiving the first positioning signal and transmitting the second positioning signal.
FIG. 11 is a schematic structural diagram of a communications device according to an embodiment of the present application.
FIG. 12 is another schematic structural diagram of a communications device according to an embodiment of the present application.
FIG. 13 is a schematic structural diagram of a communications apparatus according to an embodiment of the present application.

### DETAILED DESCRIPTION OF THE EMBODIMENTS

The following describes the technical solutions in this application with reference to the drawings.

### Communications System

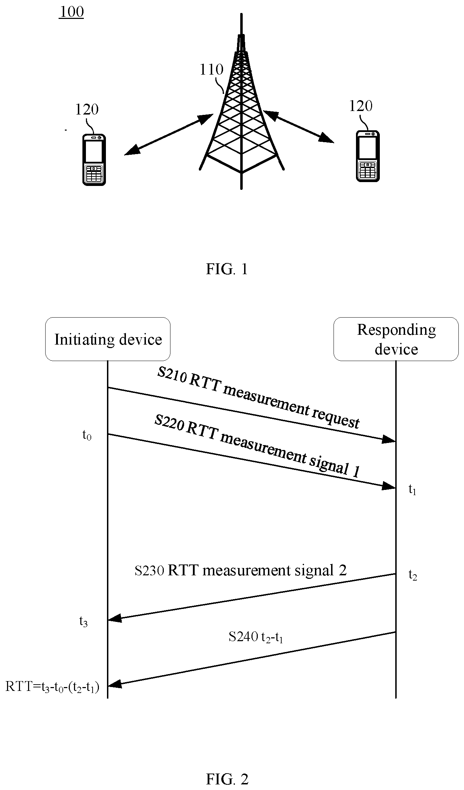

FIG. 1 illustrates a wireless communications system 100 applied to the embodiments of this application. The wireless communications system 100 may include communications devices. The communications devices may include a network device 110 and a terminal device 120. The network device 110 may be a device that communicates with the terminal device 120.

FIG. 1 exemplarily shows one network device and two terminals. Optionally, the wireless communications system 100 may include multiple network devices, and a coverage range of each network device may include another quantity of terminal devices. This is not limited in the embodiments of this application.

Optionally, the wireless communications system 100 may further include another network entity such as a network controller and a mobility management entity. This is not limited in the embodiments of this application.

It should be understood that the technical solutions in the embodiments of this application may be applied to various communications systems, for example, a 5th generation (5G) system or a new radio (NR), a long-term evolution (LTE) system, an LTE frequency division duplex (FDD) system, and an LTE time division duplex (TDD). The technical solutions provided in this application may further be applied to future communications systems, such as a 6th-generation mobile communications system or a satellite communications system.

The terminal device in the embodiments of this application may also be referred to as user equipment (UE), an access terminal, a user unit, a user station, a mobile station, a mobile station (MS), a mobile terminal (MT), a remote station, a remote terminal, a mobile device, a user terminal, a terminal, a wireless communications device, a user agent, or a user apparatus. The terminal device in the embodiments of this application may be a device that provides voice and/or data connectivity to a user, and may be configured to connect a person, a thing, and a machine, for example, a handheld device and an in-vehicle device that have a wireless connection function. The terminal device in the embodiments of this application may be a mobile phone, a Pad, a notebook computer, a laptop computer, a mobile internet device (MID), a wearable device, a virtual reality (VR) device, an augmented reality (AR) device, a wireless terminal in industrial control, a wireless terminal for self-driving, a wireless terminal in a remote medical surgery, a wireless terminal in a smart grid, a wireless terminal in a transportation safety, a wireless terminal in a smart city, a wireless terminal in a smart home, or the like. Optionally, the UE may be configured to serve as a base station. For example, the UE may act as a scheduling entity that provides a sidelink signal between UEs in vehicle-to-everything (V2X), device to device (D2D), etc. For example, cellular phones and vehicles communicate with each other through side link signals. Cellular phones can communicate with smart home devices without having to relay communication signals via base stations.

The network device in the embodiments of this application may be a device for communicating with a terminal device, and the network device may also be referred to as an access network device or a radio access network device. For example, the network device may be a base station. The network device in the embodiments of this application may be a radio access network (RAN) node (or device) that accesses a radio network via a terminal device. The base station may broadly cover various names in or replace with the following names: a NodeB, an evolved NodeB (eNB), a next-generation base station (next generation NodeB, gNB), a relay station, an access point, a transmission point (transmitting and receiving point, TRP), a transmitting point (TP), a master station MeNB, a secondary station SeNB, a multimode radio (MSR) node, a home base station, a network controller, an access node, a wireless node, an access point (AP), a transmission node, a transceiver node, a baseband unit (BBU), a remote radio unit (RRU), an active antenna unit (AAU), a remote radio head (RRH), a central unit (CU), a distributed unit (DU), or a positioning node. The base station may be a macro base station, a micro base station, a relay node, a donor node, or the like, or a combination thereof. The base station may further refer to a communications module, a modem, or a chip that is configured to be disposed in the foregoing device or apparatus. The base station may further be a mobile switching center and a device-to-device (D2D), a vehicle-to-everything (V2X), a device that functions as a base station in machineto-machine (M2M) communication, a network side device in a 6G network, a device that functions as a base station in a future communications system, or the like. The base station may support a network of a same or different access technologies. The embodiments of the present application do not impose limitations on the specific technologies and specific device forms adopted by the access network device.

The base station may be stationary or mobile. For example, a helicopter or drone may be configured to act as a mobile base station, and one or more cells can move according to the location of the mobile base station. In other examples, a helicopter or drone may be configured as a device for communicating with another base station.

The communications devices involved in the wireless communications system may include not only access network devices and terminal devices but also core network elements. The core network elements may be implemented through devices, i.e., the core network elements are core network devices. It should be understood that core network devices may also be considered as network devices.

The core network elements in the embodiments of the present application may include network elements responsible for processing and forwarding user signaling and data. For example, the core network devices may include a core access and mobility management function (AMF), a session management function (SMF), a user plane gateway, a location management function (LMF), and other core network devices. The user plane gateway may be a server that provides functions such as mobility management, routing, and forwarding of user plane data, and typically located on the network side, such as a serving gateway (SGW), a packet data network gateway (PGW), or a user plane function (UPF). Alternatively, the core network may also include other network elements, which are not exhaustively listed here.

In some deployments, the network device in the embodiments of this application may refer to the CU or DU, or the network device includes a CU and a DU. The gNB may further include an AAU.

The network device and the terminal device may be deployed on land indoors or outdoors, and the network device and the terminal device each may be a handheld or in-vehicle device. The network device and the terminal device may also be deployed on a water surface, on airborne aircraft, balloons and satellites. A scenario in which the network device and the terminal device are located is not limited in the embodiments of this application.

It should be understood that all or a part of functions of the communications device in this application may be implemented by software running on hardware or by a virtualized function instantiated on a platform (e.g., a cloud platform).

### TA

In wireless communication, discrete Fourier transform spread OFDM (DFT-s-OFDM) is used for uplink transmission, which causes an entire frequency band of a same symbol to be shared among multiple users. To ensure orthogonality of uplink signals from users, the communications system requires that a time difference in arrival of signals from the terminal devices to a base station of a serving cell does not exceed a time length corresponding to a cyclic prefix (CP). Therefore, a terminal device far from the base station needs to send a signal in advance relative to a terminal device near the base station. The base station can indicate the required timing advance, or the terminal device can adjust the timing advance based on its measurements.

### NTN

The NTN can provide communication services to a user in a non-terrestrial mode, i.e., communicate with a terminal device via a non-terrestrial network device such as a satellite (SAT) or a UAS platform.

For terrestrial network communication, deploying communications devices in environments such as oceans, mountains, and deserts is often unfeasible. Additionally, considering the costs of deployment and operation, terrestrial networks typically do not cover sparsely populated areas. Compared to terrestrial network communication, NTN offers several advantages. First, NTN communication is not restricted by geographical limitations. Theoretically, satellites can orbit the Earth, allowing satellite communication to cover every corner on the Earth. Furthermore, a non-terrestrial network device can cover a much larger area than a terrestrial communications device, meaning NTN cells can provide significantly broader coverage.

The non-terrestrial network devices can move relative to the Earth, causing cells to move across the Earth surface. This makes it challenging for network devices to reliably locate a terminal device and even to identify the country in which the terminal device is operating, potentially hindering NTN's ability to support regulatory services. Based on this, relying solely on global navigation satellite system (GNSS) reports from terminal devices is unreliable. Combining GNSS reports with network-based solutions can enhance reliability. Therefore, network operators should cross-check the location of terminal devices in addition to the GNSS position reported by the terminal device itself, to meet potential regulatory requirements.

### Positioning Technologies

As communications technologies become more mature, some communications systems (for example, 5G systems) may implement increasing communications algorithms. These communication algorithms may include information high-rate transmission, positioning technologies, and the like. For example, for the foregoing NTN system, the terminal device can be located not only through the GNSS but also through communication algorithms, to meet the requirements of the NTN system.

Some wireless communications systems may include servers. The solution of the location coordinates of the terminal device may be performed in the server. Such a server may also be referred to as a positioning server.

The positioning server may be a network device that is provided by an operator and has a positioning function. The network device with a positioning function may be a core network device or a cloud server. For example, the positioning server in the embodiments of this application may include one or more of a location management function (LMF), a location management component (LMC), or a local location management function (LLMF) located in the network device. This is not limited in the embodiments of this application.

Among positioning technologies, RTT positioning is preferred due to its high accuracy and the advantage of not relying on timing synchronization between the network device and the terminal device. The following provides an explanation of RTT positioning.

### RTT positioning

In a communications system, RTT positioning can locate a responding device based on a positioning signal transmitted between the responding device and an initiating device. The positioning signal may be, for example, a reference signal or a pilot signal. In some embodiments, this positioning signal may also be referred to as an RTT measurement signal.

The responding device can be the device to be located, while the initiating device can be the device for locating the responding device. For example, the responding device can be a terminal device, and the initiating device can be a network device. The network device may be an access network device, a positioning server, or the like.

It should be noted that, for the sake of description, the following embodiments primarily describe positioning with the responding device being a terminal device, i.e., positioning of a terminal device. However, this application can also be applied to the positioning of other communications devices. For the positioning of other communications devices, the term "terminal device" in the embodiments can be replaced with the respective communications devices.

FIG. 2 is a diagram illustrating the RTT positioning. The method shown in FIG. 2 may include steps S210 to S240.

In step S210, the initiating device sends an RTT measurement request to the responding device.

In step S220, the initiating device sends an RTT measurement signal 1 to the responding device.

The initiating device transmits the RTT measurement signal 1 at t₀. Due to transmission delays, the responding device receives the RTT measurement signal 1 at t₁. That is, the time of arrival (TOA) of the RTT measurement signal 1 is at t₁.

The RTT measurement signal 1 may, for example, include a downlink positioning reference signal (DL PRS).

In step S230, the responding device sends an RTT measurement signal 2 to the initiating device.

The responding device sends the RTT measurement signal 2 at t₂. Due to transmission delays, the initiating device receives the RTT measurement signal 2 at t₃. That is, the time of arrival of the RTT measurement signal 2 is at t₃.

The RTT measurement signal 2 may, for example, include a sounding reference signal (SRS).

In the case where the initiating device is a network device, the difference (t₃-t₀) between t₃ and t₀ can represent the time difference between the reception and transmission times at the network device. This reception and transmission time difference (referred to as Tx-Rx time difference or simply Tx-Rx difference) may, for example, be denoted as gNB_{Rx-Tx}. For the sake of description, the Tx-Rx time difference at the initiating device will be represented as gNB_{Rx-Tx} in the following description.

In some embodiments, gNB_{Rx-Tx} can meet an expression of gNB_{Rx-Tx}=T_{gNB-RX}-T_{gNB-TX}. T_{gNB-RX} may be the reception timing of an uplink subframe #i containing the SRS associated with the terminal device at a transmission reference point (TRP) (or simply a reference point), defined by a first detected time path. T_{gNB-TX} may be the transmission timing of the TRP for a downlink subframe #j that is closest in time to the subframe #i received from the terminal device. Multiple SRS resources can be used to determine the start of a subframe that contains the SRS.

In step S240, the responding device sends the difference (t₂ - t₁) between the time t₂ and the time t₁ to a network device via the RTT report. The network device includes a positioning server and/or an initialization device. In the case where the responding device is a terminal device, the difference between the time t₁ and the time t₂ can represent the time difference between reception and transmission by the terminal device (referred to as transmission-reception time difference or Tx-Rx time difference), which can be represented, for example, by UE_{Tx-Rx} or UE_{Rx-Tx}. For convenience of description, the transmission-reception time difference of the responding device is represented as UE_{Tx-Rx} below.

In some embodiments, UE_{Tx-Rx} can be calculated from UE_{Tx-Rx} = T_{UE-TX} - T_{UE-RX}. UE_{Rx-Tx} can be calculated from UE_{Rx-Tx} = T_{UE-RX} - T_{UE-TX}. It can be understood that UE_{Tx-Rx} = -UE_{Rx-Tx}. That is, UE_{Tx-Rx} and UE_{Rx-Tx} can be interchangeably used based on UE_{Tx-Rx} = - UE_{Rx-Tx}. T_{UE-RX} can be the timing of the downlink subframe #i received by the terminal device from the transmission point (TP), defined by the first detected time path. T_{UE-TX} can be the timing of the uplink subframe #j transmitted by the terminal device, which is closest in time to the downlink subframe #i received from the TP. Multiple DL PRS or CSI-RS can be used to determine this subframe.

RTT can be calculated based on the time t₀, time t₃, and the difference between the received times t₂ and t₁. For example, RTT can be calculated from RTT = t₃ - t₀ - (t₂ - t₁). Alternatively, RTT can be obtained based on UE_{Tx-Rx} and gNB_{Rx-Tx}. That is, RTT can be calculated from RTT = gNB_{Rx-Tx} - UE_{Tx-Rx}.

For example, the terminal device may transmit an RTT report to the positioning server, which can include the UE_{Tx-Rx} measured for at least one network device. The network device may transmit an RTT report to the positioning server, which can include gNB_{Rx-Tx}. The positioning server can determine the RTT based on RTT = gNB_{Rx-Tx} - UE_{Tx-Rx}. The RTT report may also be referred to as a measurement report.

After obtaining the RTT, the one-way path delay can be determined. For example, the one-way path delay R = (gNB_{Rx-Tx} - UE_{Tx-Rx}) / 2. That is, the time difference between gNB_{Rx-Tx} and UE_{Tx-Rx} is equal to twice the one-way path delay R.

The distance d between the initialization device and the responding device can be calculated from d = R × c, where c represents the speed of light.

Based on the distance between the initialization device and the responding device, the responding device can be located.

For example, RTT positioning can be implemented by multiple RTTs. For instance, in a communications system, multiple RTTs between the network device and the terminal device can be measured. The distances between the terminal device and network devices can be determined respectively based on multiple RTTs, thereby calculating the location of the terminal device.

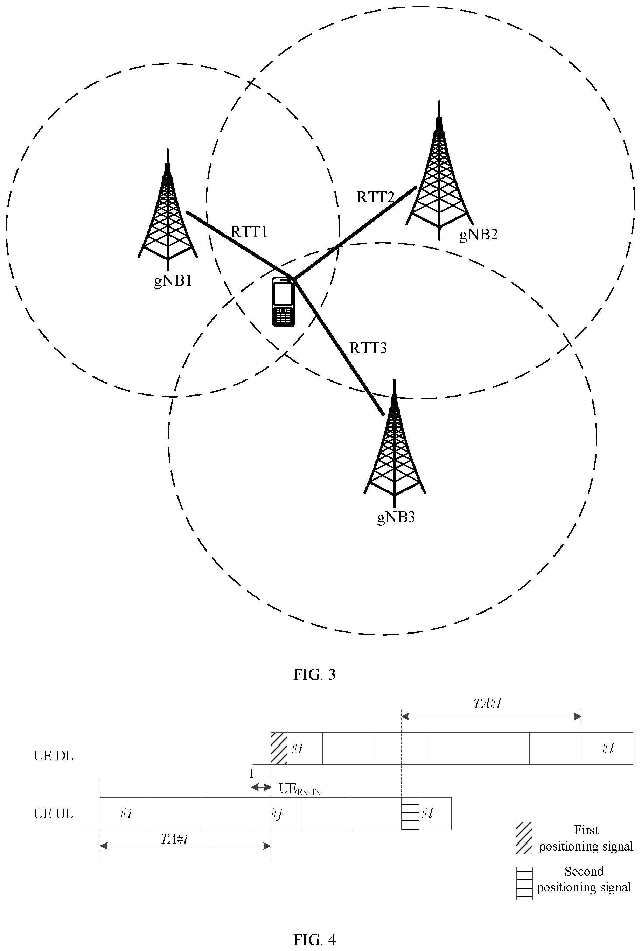

As shown in FIG. 3, the terminal device can be positioned using three network devices. In FIG. 3, the three network devices are gNB1, gNB2, and gNB3. The distances between the terminal device and the respective gNBs can be calculated based on RTT1 between gNB1 and the terminal device, RTT2 between gNB2 and the terminal device, and RTT3 between gNB3 and the terminal device, thus determining the position of the terminal device.

It should be noted that FIG. 3 is merely an example, and the terminal device can be positioned using other numbers of network devices.

### RTT Positioning in NTN

Taking non-terrestrial network devices, such as satellites, as an example, multi-RTT technology can be divided into two types: single-satellite multi-RTT and multi-satellite multi-RTT.

Single-satellite multi-RTT can utilize the movement of a satellite (e.g., a Low Earth Orbit (LEO) satellite) to perform multiple measurements at different times, thereby obtaining distances between multiple reference points of the satellite and the terminal device. These distances can then be used to determine the position of the terminal device.

Multi-satellite multi-RTT, on the other hand, involves measurements based on multiple satellites within a short time frame, obtaining the distances between the terminal device and several satellites. These distances can then be used to determine the position of the terminal device.

Unlike terrestrial communication, in NTN scenarios, non-terrestrial network devices can move at high speeds. For example, a LEO satellite can move at a very high speed (e.g., 7.6 km/s). Therefore, in RTT positioning in NTN, the high-speed movement of non-terrestrial network devices may cause positioning anomalies.

As noted above, in order to implement RTT positioning, the terminal device needs to receive the first positioning signal and send the second positioning signal. In some cases, the time period for transmitting the first positioning signal corresponds to the first TA, and the time period for transmitting the second positioning signal corresponds to the second TA. It is found that the first TA may differ from the second TA, which can lead to inaccurate positioning. For example, in an NTN system, due to the high-speed movement of satellites, the distance between the satellite and the terminal device continuously changes. To maintain uplink synchronization, the TA may change rapidly, which can result in the situation described above. When the terminal device reports the transmission/reception time difference, the reception time of the first positioning signal and the transmission time of the second positioning signal need to be determined. Typically, the transmission time of the second positioning signal is determined based on the uplink timing of receiving the first positioning signal. When the first TA is different from the second TA differ, the positioning becomes inaccurate. For example, in satellite communication, the terminal device adjusts the TA when sending the second positioning signal. If the system-calculated TA (i.e., the first TA) is t1, the terminal device may adjust the TA to t1-Δt0.

Taking the scenario shown in FIG. 4 as an example, the first positioning signal is transmitted in subframe *i*, and TA#*i* is the TA corresponding to the time period for transmitting the first positioning signal (i.e., the first TA). The second positioning signal is transmitted in subframe *l*, and TA#*l* is the TA corresponding to the time period for transmitting the second positioning signal (i.e., the second TA). The TA#*i* may differ from TA#*l*.

If the first TA is different from the second TA are different, RTT-based positioning of the terminal device will inaccurate.

With reference to FIG. 4, when reporting the transmission/reception time difference the terminal device may report the actual index difference between the uplink subframe j and the downlink subframe i in which the first positioning signal is received. Here, the uplink subframe j is closest in time to the downlink subframe i in which the first positioning signal is received from the transmission point (TP). If the uplink subframe, i.e., the subframe j in FIG. 4, closest to subframe i is considered, then the TA at that time does not correspond to the actual TA for transmitting the second positioning signal. Therefore, the transmission/reception difference reported by the terminal device is inaccurate, and the calculated transmission/reception difference does not reflect the actual transmission/reception time difference.

In some embodiments, there may be an error in downlink synchronization. The magnitude of the error is related to the sampling interval of the synchronization signal. The transmission distance corresponding to the time error is significantly greater than the accuracy required for positioning. Due to the limitations of TA quantization intervals, the distance corresponding to the precision of the quantized TA timing is also much greater than what is required for accurate positioning. In other words, the downlink synchronization error and the limitations on the TA quantization interval typically result in a reported transmission/reception time difference that does not meet the accuracy requirements for positioning. Therefore, the terminal device needs to perform high-precision measurements of the transmission/reception difference specifically for positioning purposes. To address this issue, the terminal device can adopt the following first solution or second solution.

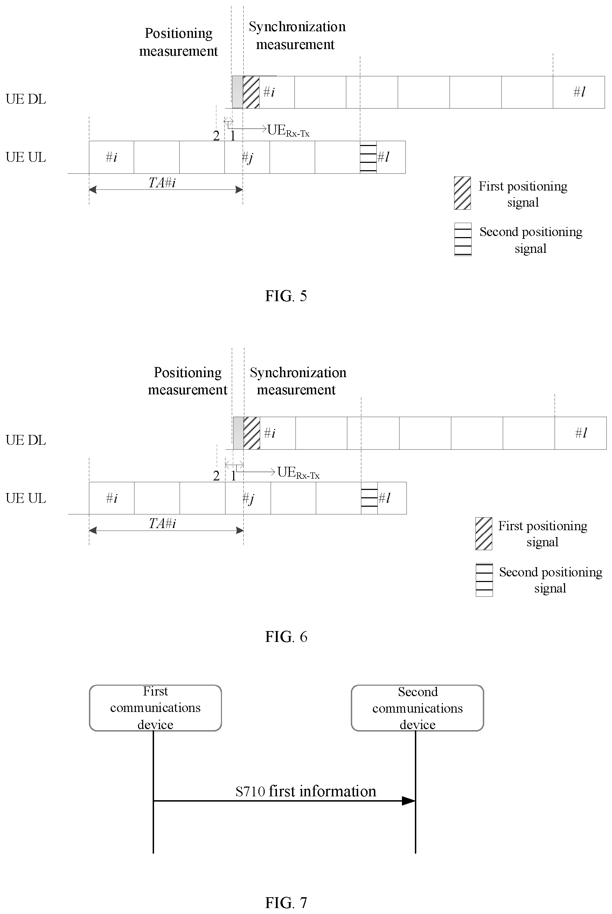

In the first solution, after obtaining the transmission/reception time difference, the terminal device reports the transmission/reception difference, which can be determined based on positioning measurements. FIG. 5 shows a schematic diagram for calculating the transmission/reception difference in the first solution. As illustrated in FIG. 5, UE_{Tx-Rx} can be calculated based on the positioning measurement and the time difference between subframes. The first subframe may be the uplink subframe closest to the first positioning signal received by the terminal device. In FIG. 5, the first subframe may be represented by *j*.

In the second solution, the terminal device does not report the transmission/reception time difference. Instead, the timing for transmitting the SRS is tuned so that the network side can obtain an accurate transmission/reception difference. The terminal device fine-tunes the timing for transmitting the SRS. For example, as shown in FIG. 6, due to the impact from the TA quantization interval and the synchronization error, the downlink reception time obtained directly based on downlink synchronization is earlier than the reception time measured using a downlink positioning reference signal. If the transmission time used for calculating the transmission/reception time difference corresponds to the position indicated by dashed line 2 in the figure, then the value calculated using downlink synchronization will be greater than that measured using the downlink positioning reference signal. Since the measurement using the downlink positioning reference signal is more accurate, the SRS needs to be transmitted with a delay of 2×Δt0. This turning ensures that the transmission/reception time difference calculated on the base station side increases, thereby compensating for the error in transmission/reception time difference on the terminal device side. Here, Δt0 represents the time by which the downlink synchronization timing measured using the downlink positioning reference signal is earlier than that measured using the downlink synchronization signal. The terminal device slightly delays the uplink transmission timing by 2×Δt0 relative to the original timing, so that the transmission/reception time difference can accurately reflect the actual timing information.

The transmission/reception time difference obtained by tuning the SRS transmission can be understood as follows: the transmission/reception time difference of the terminal device can be determined based on synchronization measurement. FIG. 6 is a schematic diagram of calculating the transmission/reception time difference in the second solution. As shown in FIG. 6, the UE_{Tx-Rx} can be calculated based on the time difference between the synchronization measurement and the first subframe. The first subframe may be the uplink subframe closest in time to the terminal device's reception of the first positioning signal. In FIG. 6, the first subframe may be denoted as *j*.

FIG. 7 illustrates a wireless communications method according to the embodiments of the present application to address the above issues.

The method shown in FIG. 7 can be performed by the first communications device and the second communications device.

In some embodiments, the first communications device may include the responding device mentioned earlier. That is, the first communications device can be the device to be located. For example, the first communications device can include a terminal device. The second communications device may include the initialization device mentioned earlier. That is, the second communications device can be used for locating the first communications device. For example, the second communications device can include network devices such as an access network device, a positioning server, etc. Exemplarily, the second communications device may include a non-terrestrial communications device. In other words, the present application can be applied in NTN systems.

Alternatively, the first communications device can be located using RTT-based positioning. In this process, the second communications device sends a first positioning signal to the first communications device, and the first communications device sends a second positioning signal back to the second communications device. For example, the first positioning signal may include PRS, while the second positioning signal may include SRS. The difference between the time when the first communications device receives the first positioning signal and when the first communications device sends the second positioning signal is referred to as the first time difference. Specifically, the first time difference corresponds to the UE_{Tx-Rx} mentioned earlier, which represents the transmission/reception time difference used for RTT-based positioning.

In some embodiments, the first communications device may include the initialization device described earlier. That is, the first communications device can be used to locate other communications devices. For example, the first communications device can include network devices such as an access network device. Exemplarily, the first communications device can also include a non-terrestrial communications device. The second communications device may include a positioning server. Based on the information reported by the first communications device, the second communications device can perform the positioning of the device to be located.

Optionally, the positioning of the device to be located can be achieved through RTT-based positioning. During the RTT positioning process, the first communications device can send the second positioning signal to the device to be located. The device to be located can send the first positioning signal to the first communications device. Exemplarily, the first positioning signal can include SRS, and the second positioning signal can include PRS. The difference between the time when the first communications device receives the first positioning signal and the time when the first communications device sends the second positioning signal can be the first time difference. That is, the first time difference can be the gNB_{Rx-Tx} mentioned earlier.

For convenience of description, the following examples are mostly explained with the first time difference as UE_{Tx-Rx}. It can be understood that the following examples can also apply to the cases where the first time difference is gNB_{Rx-Tx}, and this application does not impose any limitations on that.

The method shown in FIG. 7 may include a step S710.

In step S710, the first communications device sends first information to the second communications device.

The first information can be related to the first time difference. For example, the first information can include the first time difference. In other words, the first communications device can report the first time difference to the second communications device. Alternatively, the first information can indicate information related to the first time difference. Based on the received information related to the first time difference, the second device can calculate the first time difference.

The first information may also be related to the first TA and/or the second TA. Where the first TA can be the TA corresponding to the time period for transmitting the first positioning signal, and the second TA can be the TA corresponding to the time period for transmitting the second positioning signal. Referring to FIG. 4, the first TA can be TA#i, and the second TA can be TA#*l*. Here, TA#*l* and TA#i represent the time advances used for an uplink subframe *l* and a downlink subframe i, respectively.

For example, the first information can include the first TA and/or the second TA. Alternatively, the first information can be information related to the first TA and/or the second TA. For example, the first information can be calculated based on the first TA and/or the second TA.

It should be noted that the first TA and the second TA may be equal or unequal.

It can be understood that the first information reported by the first communications device not only takes into account the first time difference, but also considers the first TA and/or the second TA. Therefore, even if the fact the the first TA is different from the second TA, the problem of positioning inaccuracies caused from the difference between the first TA and the second TA can be corrected based on the first information.

In some embodiments, the first time difference can be determined based on the first TA and/or the second TA. In other words, the transmission/reception time difference can be modified according to the first TA and/or the second TA. For example, the first time difference may be calculated based on the second time difference, using the first TA and/or the second TA as a basis. The second time difference is described in detail below.

The first uplink subframe that is temporally closest to the reception of the first positioning signal by the first communications device is referred to as the first subframe. The difference between the time at which the first communications device receives the first path of the first positioning signal and the start time of the first subframe can be defined as the second time difference. In other words, the second time difference may correspond to the time difference between the reception time of the first path of the first positioning signal and the starting moment of the first subframe.

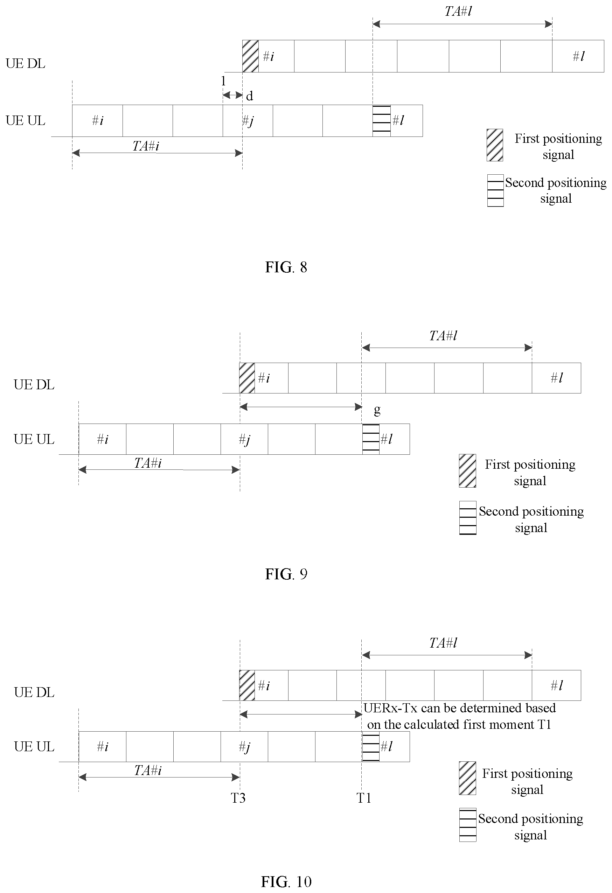

As shown in FIG. 8, the first communications device receives the first positioning signal in a downlink subframe i, and the first subframe is an uplink subframe j. The second time difference is d shown in FIG. 8. That is, d = timing at which the first communications device receives the first path of the first positioning signal - uplink timing of the subframe #j, or d = uplink timing of the subframe #j - timing at which the first communications device receives the first path of the first positioning signal.

It should be understood that the second time difference may be calculated using the methods defined for determining the transmission/reception time difference in related technologies. Therefore, in this application, the impact of the first TA and/or the second TA on the transmission/reception time difference can be compensated for within the transmission/reception time difference itself. This enables the derivation of a more accurate transmission/reception time difference, thereby achieving more precise positioning.

Optionally, the first time difference may be determined based on the difference between the first TA and the second TA. The difference between the first TA and the second TA may include: first TA minus second TA, second TA minus first TA, or the absolute value of the difference between the first and second TAs, i.e., |first TA - second TA|, where "| |" denotes calculating the absolute value.

In some embodiments, an adjustment amount of the second time difference may be calculated based on the difference between the first TA and the second TA. Based on the second time difference and this adjustment amount, the first time difference can be obtained.

For example, the first time difference may be represented by using UE_{Tx-Rx}. UE_{Tx-Rx} can meet UE_{Tx-Rx} = d + TA₂ - TA₁. D represents the second time difference, TA₂ represents a value of the second TA, and TA₁ represents a value of the first TA.

According to the foregoing description, the first time difference may be obtained by calculation based on the second time difference in the related technologies. It should be understood this technical solution can reuse existing calculation methods in the related art, requiring only minimal modifications to the existing framework, thereby making implementation easier and more feasible.

In some embodiments, the calculation method of the first time difference can be redefined.

For example, the first time difference can be determined based on a first value. The method for calculating the first value is described in detail below.

The difference between the time at which the first communications device receives the first path of the first positioning signal and the time at which the first communications device transmits the second positioning signal can be referred to as a third time difference. The first value can be obtained by performing a modulo operation on the third time difference with respect to the subframe duration. Here, the subframe duration refers to the length of time of a single subframe.

As shown in FIG. 9, the time at which the first communications device receives the first path of the first positioning signal is represented by a downlink subframe *i*. The time at which the second positioning signal is transmitted is represented by an uplink subframe *l*. The third time difference can be the difference between the start time of subframe *i* and the start time of subframe *l*. That is, the third time difference can be the time difference labeled as g in the figure.

For example, the first time difference UE_{Tx-Rx} can be expressed as: UE_{Tx-Rx} = Ts - mod(g, Ts), where g represents the third time difference, Ts represents the subframe length, and mod() denotes the modulo operation. In other words, UE_{Tx-Rx} is the value of g after removing the integer multiples of the subframe length. With reference to FIG. 9, the first time difference can be the remainder of the time difference between subframe *l* and the time when the first communications device receives the first positioning signal, after subtracting the integer multiples of the subframe length.

As shown in FIG. 9, the first time difference UE_{Tx-Rx}, calculated based on the third time difference g, can be unaffected by TA, thus avoiding inaccurate positioning caused by the difference between the first TA and the second TA.

In some embodiments, the first communications device can tune the time of receiving the first positioning signal (referred to as the reception time) and/or the time of sending the second positioning signal (referred to as the transmission time). The first time difference can still be calculated with related techniques based on the tuned reception time and transmission time, thereby achieving precise positioning.

Alternatively, when calculating the first time difference, the time at which the first communications device receives the first positioning signal can be tuned to a first moment. The first moment can be related to the first and second subframes. The first subframe can be the uplink subframe closest to the time when the first communications device receives the first positioning signal. The second subframe can be the subframe in which the first communications device sends the second positioning signal.

For example, the first moment T1 can be expressed as T1 = T3 + (*l* - j) * Ts, where T3 represents the time when the first communications device receives the first positioning signal's first path, j represents the serial number of the first subframe, *l* represents the serial number of the second subframe, and Ts represents the subframe length.

It can be understood that when calculating the transmission/reception time difference (i.e., the first time difference), the transmission time T_{UE-TX} used is the subframe in which the first communications device sends the second positioning signal.

In FIG. 10, the first moment is represented by T1, and the third moment is represented by T3. As shown in FIG. 10, the first moment T1 can be calculated from T1 = T3 + (*l*-j) * Ts. The UE_{Tx-Rx} can be determined based on the calculated first moment T1.

Alternatively, when calculating the first time difference, the time at which the first communications device sends the second positioning signal can be tuned to the second moment. The second moment can be related to the first and second subframes. The first subframe can be the uplink subframe that is closest in time to when the first communications device receives the first positioning signal. The second subframe can be the subframe in which the first communications device sends the second positioning signal.

For example, the second moment T2 can be calculated from T2 = T4 - (*l* - j) * Ts. T4 represents the time at which the first communications device sends the second positioning signal, j is the serial number of the first subframe, *l* is the serial number of the second subframe, and Ts is the subframe length.

In some embodiments, the first communications device can tune the time at which it will send the second positioning signal. Since the transmission/reception time difference calculated by the first communications device has increased compared to the actual value, the transmission of the first positioning signal needs to be delayed so that the transmission/reception difference calculated by the second communications device increases. This tuning helps eliminate the transmission/reception error on the first communications device side. For example, if the downlink synchronization time measured based on the first positioning signal is ahead of the downlink synchronization time measured based on the downlink synchronization signal by Δt0, the uplink transmission time of the first communications device needs to be fine-tuned during signal transmission. Specifically, the uplink transmission time of the first communications device should be adjusted backward by Δt0, ensuring that the transmission/reception difference reflects the accurate information.

In some embodiments, the first information may include a first TA and/or a second TA. For example, the first communications device may report the first TA and/or the second TA to the second communications device, so that the second communications device compensates for the transmission/reception time difference according to the first TA and/or the second TA, so as to obtain the first time difference. That is, in a position calculation process, the second communications device may consider impact of TA on the RTT, so as to implement accurate positioning.

In some embodiments, the first information may include a difference between the first TA and the second TA. That is, the first communications device may report the difference between the first TA and the second TA to the second communications device, so that the second communications device compensates for the transmission/reception time difference according to the difference between the first TA and the second TA, so as to obtain the first time difference.

It can be understood that, the method for calculating the first transmission/reception time difference described in the above embodiments can be performed by the second communications device based on one or more of the received first TA, the received second TA, or the received difference between the first TA and second TA.

Optionally, the first communications device may send the transmission/reception time difference obtained through related techniques to the second communications device. For example, the first communications device may report the time difference between the reception time of the first path of the first positioning signal and the uplink time of the first subframe. The first subframe is the uplink subframe closest to the reception of the first positioning signal by the first communications device. Based on the first information containing one or more of the first TA, second TA, or the difference between the first TA and second TA, the second communications device can compensate for the transmission/reception time difference in related techniques, thereby obtaining a more accurate transmission/reception time difference and achieving precise positioning.

Optionally, the second communications device may determine the transmission/reception time difference or RTT based on one or more of the first TA, the second TA, or the difference between the first TA and second TA contained in the first information. In other words, even if the first communications device does not report the transmission/reception time difference to the second communications device, the second communications device can independently calculate the RTT and/or transmission/reception time difference based on the first information.

It should be noted that the first TA and/or second TA can be tuned by the first communications device. For example, the first communications device may include a terminal device, and the terminal device can tune the TA on its own. In this case, the first communications device can tune the TA by itself and report the TA information related to RTT positioning (e.g., including one or more of the first TA, the second TA, or the difference between the first TA and second TA) to the second communications device.

It should be noted that the first TA and/or second TA can be tuned by the second communications device. For example, the second communications device may include a base station, and the base station can tune the TA of the first communications device. In this case, the second communications device can directly obtain the TA information related to RTT positioning and make modification to the RTT positioning.

It should be noted that the first TA and/or second TA can be tuned by a third communications device. The third communications device can be a device different from both the first and second communications devices. For example, the first communications device may be a terminal device, the second communications device may be a positioning server, and the third communications device may be a base station. In this case, the third communications device can directly send the TA information related to RTT positioning to the second communications device, or the third communications device can send the TA information to the first communications device which in turn forwards the TA information to the second communications device.

In some embodiments, the TA can be tuned based on the accuracy of positioning and synchronization measurements. For example, in the case where the first communications device is a terminal device, the terminal device can tune the second TA based on the accuracy of the positioning and synchronization measurements to improve the accuracy of the transmission/reception time difference. It should be understood that, in this case, the purpose of tuning the TA is not to ensure the orthogonality of the uplink signals of different users, but rather to more accurately calculate the transmission/reception time difference.

The method embodiments of the present application have been described in detail above. Below, the device embodiments of the present application will be described in detail. It should be understood that the descriptions of the method embodiments correspond to those of the device embodiments. Therefore, parts that are not described in detail can refer to the method embodiments described earlier.

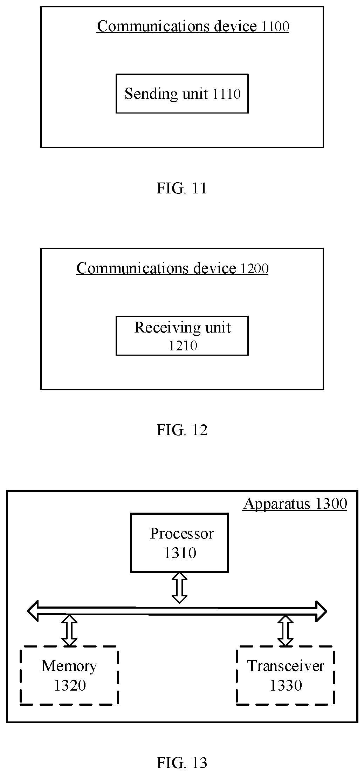

FIG. 11 is a schematic structural diagram of a communications device 1100 according to the embodiments of the present application. The communications device 1100 is the first communications device, and includes a sending unit 1110.

The sending unit 1110 is configured to transmit first information, where a difference between a moment at which the first communications device receives a first positioning signal and a moment at which the first communications device sends a second positioning signal is a first time difference, a TA corresponding to a time period for transmitting the first positioning signal is a first TA, a TA corresponding to a time period for transmitting the second positioning signal is a second TA, the first information is related to the first time difference, and the first information is further related to the first TA and/or the second TA.

In some embodiments, the first time difference is determined based on the first TA and/or the second TA.

In some embodiments, the first time difference is determined based on a difference between the first TA and the second TA.

In some embodiments, the first time difference UE_{Tx-Rx} is calculated from UE_{Tx-Rx}=d+TA₂-TA₁, where a first subframe is an uplink subframe closest to the first positioning signal received by the first communications device, and a difference between a time at which the first communications device receives a first path of the first positioning signal and the first subframe is a second time difference, wherein d represents the second time difference, TA₂ represents the second TA, and TA₁ represents the first TA.

In some embodiments, a difference between a time at which the first communications device receives a first path of the first positioning signal and a time at which the first communications device sends the second positioning signal is a third time difference, the third time difference is modulo a subframe length to obtain a first value, and the first time difference is determined according to the first value.

In some embodiments, the first time difference UE_{Tx-Rx} is calculated from UE_{Tx-Rx}=Ts-mod(g, Ts), wherein g represents the third time difference, Ts represents the subframe length, and mod() represents modulo operation.

In some embodiments, in calculating the first time difference, the time at which the first communications device receives the first positioning signal is adjusted to a first moment, the first moment is related to a first subframe and a second subframe, the first subframe is an uplink subframe closest to the first positioning signal received by the first communications device, and the second subframe is the subframe at which the first communications device sends the second positioning signal.

In some embodiments, the first moment T1 meets T1 =T3+(*l*-j)*Ts, wherein T3 represents the time at which the first communications device receives a first path of the first positioning signal, j represents a serial number of the first subframe, *l* represents a serial number of the second subframe, and Ts represents a subframe length.

In some embodiments, in calculating the first time difference, a time at which the first communications device sends the second positioning signal is adjusted to a second moment, the second moment is related to a first subframe and a second subframe, the first subframe is an uplink subframe closest to the first positioning signal received by the first communications device, and the second subframe is the subframe at which the first communications device sends the second positioning signal.

In some embodiments, the second time T2 is calculated from T2 =T4-(*l*-j)*Ts, wherein T4 represents the time at which the first communications device sends the second positioning signal, j represents a serial number of the first subframe, *l* represents a serial number of the second subframe, and Ts represents a subframe length.

In some embodiments, the first information comprises the first TA and/or the second TA.

In some embodiments, the first information comprises a difference between the first TA and the second TA.

In some embodiments, the sending unit 1110 may be a transceiver 1330. The communications device 1100 may also include a processor 1310 and a memory 1320, as shown in detail in FIG. 13.

FIG. 12 is a schematic diagram of a communications device 1200 according to the embodiments of the present application. The communications device 1200 is the second communications device. The communications device 1200 includes a receiving unit 1210.

The receiving unit 1210 is configured to receive first information sent by the first communications device, where a difference between a moment at which the first communications device receives a first positioning signal and a moment at which the first communications device sends a second positioning signal is a first time difference, a time advance TA corresponding to a time period for transmitting the first positioning signal is a first TA, a TA corresponding to a time period for transmitting the second positioning signal is a second TA, the first information is related to the first time difference, and the first information is further related to the first TA and/or the second TA.

In some embodiments, the first time difference is determined based on the first TA and/or the second TA.

In some embodiments, the first time difference is determined based on a difference between the first TA and the second TA.

In some embodiments, the first time difference UE_{Tx-Rx} is calculated from UE_{Tx-Rx}=d+TA₂-TA₁, where a first subframe is an uplink subframe closest to the first positioning signal received by the first communications device, and a difference between a time at which the first communications device receives a first path of the first positioning signal and the first subframe is a second time difference, wherein d represents the second time difference, TA₂ represents the second TA, and TA₁ represents the first TA.

In some embodiments, a difference between a time at which the first communications device receives a first path of the first positioning signal and a time at which the first communications device sends the second positioning signal is a third time difference, the third time difference is modulo a subframe length to obtain a first value, and the first time difference is determined according to the first value.

In some embodiments, the first time difference UE_{Tx-Rx} is calculated from UE_{Tx-Rx}=Ts-mod(g, Ts), wherein g represents the third time difference, Ts represents the subframe length, and mod() represents modulo operation.

In some embodiments, in calculating the first time difference, the time at which the first communications device receives the first positioning signal is adjusted to a first moment, the first moment is related to a first subframe and a second subframe, the first subframe is an uplink subframe closest to the first positioning signal received by the first communications device, and the second subframe is the subframe at which the first communications device sends the second positioning signal.

In some embodiments, the first moment T1 meets T1 =T3+(*l*-j)*Ts, where T3 represents the time at which the first communications device receives a first path of the first positioning signal, j represents a serial number of the first subframe, *l* represents a serial number of the second subframe, and Ts represents a subframe length.

In some embodiments, in calculating the first time difference, a time at which the first communications device sends the second positioning signal is adjusted to a second moment, the second moment is related to a first subframe and a second subframe, the first subframe is an uplink subframe closest to the first positioning signal received by the first communications device, and the second subframe is the subframe at which the first communications device sends the second positioning signal.

In some embodiments, the second time T2 is calculated from T2 =T4-(*l*-j)*Ts, where T4 represents the time at which the first communications device sends the second positioning signal, j represents a serial number of the first subframe, *l* represents a serial number of the second subframe, and Ts represents a subframe length.

In some embodiments, the first information comprises the first TA and/or the second TA.

In some embodiments, the first information comprises a difference between the first TA and the second TA.

In some embodiments, the receiving unit 1210 may be a transceiver 1330. The communications device 1200 may also include a processor 1310 and a memory 1320, as shown in FIG. 13.

FIG. 13 is a schematic structural diagram of a communication apparatus according to an embodiment of this application. A dashed line in FIG. 13 indicates that the unit or module is optional. The apparatus 1300 may be configured to implement the method described in the foregoing method embodiments. The apparatus 1300 may be a chip, a terminal device, or a network device.

The apparatus 1300 may include one or more processors 1310. The processor 1310 may support the apparatus 1300 to implement the method described in the foregoing method embodiments. The processor 1310 may be a general-purpose processor or a dedicated processor. For example, the processor may be a central processing unit (CPU). Alternatively, the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

The apparatus 1300 may further include one or more memories 1320. The memory 1320 stores a program, and the program may be executed by the processor 1310, so that the processor 1310 implements the method described in the foregoing method embodiments. The memory 1320 may be independent of or integrated into the processor 1310.

The apparatus 1300 may further include a transceiver 1330. The processor 1310 may communicate with another device or chip via the transceiver 1330. For example, the processor 1310 may perform data exchange with another device or chip via the transceiver 1330.

An embodiment of this application further provides a computer readable storage medium, configured to store a program. The computer readable storage medium may be applied to the communications device provided in the embodiments of this application, and the program causes the computer to implement the method performed by the communications device in the embodiments of this application.

An embodiment of this application further provides a computer program product. The computer program product includes a program. The computer program product may be applied to the communications device provided in the embodiments of this application, and the program causes the computer to implement the method performed by the communications device in the embodiments of this application.

An embodiment of this application further provides a computer program. The computer program may be applied to the communications device provided in the embodiments of this application, and the computer program causes the computer to implement the method performed by the communications device in the embodiments of this application.

It should be understood that the terms "system" and "network" in this application may be used interchangeably. In addition, the terms used in this application are merely used to explain specific embodiments of this application, and are not intended to limit this application. The terms "first", "second", "third", and "fourth" in the specification, claims, and accompanying drawings of this application are used to distinguish between different objects, and are not used to describe a specific sequence. In addition, the terms "include" and "have" and any variations thereof are intended to cover the inclusion of non-exclusive.

In this embodiment of this application, the mentioned "indication" may be a direct indication, an indirect indication, or an association relationship. For example, A indicates B, which may indicate that A directly indicates B, for example, B may be obtained based on A. Alternatively, it may indicate that A indirectly indicates B, for example, A indicates C, and B may be obtained based on C. It may further indicate that there is an association relationship between A and B.

In this embodiment of this application, "B corresponds to A" indicates that B is associated with A, and B may be determined according to A. However, it should be further understood that determining B according to A does not mean determining B according to A only, and may further determine B according to A and/or other information.

In this embodiment of this application, the term "correspondence" may indicate that there is a direct correspondence or an indirect correspondence between the two, or may indicate an association relationship between the two, or may indicate a relationship with indication, configurating, and being configurated.

In this embodiment of this application, "predefined" or "pre-configured" may be implemented in a manner in which a corresponding code, table, or other related information may be pre-stored in a device (for example, including a terminal device and a network device). A specific implementation manner of this application is not limited. For example, a predefined definition may refer to a definition in a protocol.

In this embodiment of this application, the "protocol" may refer to a standard protocol in the communications field, for example, may include an LTE protocol, an NR protocol, and a related protocol applied to a future communications system. This is not limited in this application.

In this embodiment of this application, the term "and/or" is merely an association relationship that describes an associated object, and indicates that three relationships may exist. For example, A and/or B may indicate that A exists separately, A and B exist simultaneously, and B exists separately. In addition, the character "/" in this specification generally indicates that the associated object is a "or" relationship.

In this embodiment of this application, the "includes" may be directly included, or may be indirectly included. Optionally, "include" mentioned in this embodiment of this application may be replaced with "indicate" or "used for determining". For example, A includes B, which may be replaced with A to indicate B, or A is used to determine B.

In various embodiments of this application, a sequence number of the foregoing processes does not mean a sequence of execution. The execution sequence of the processes should be determined according to functions and internal logic of the processes, and should not constitute any limitation on an implementation process of the embodiments of this application.

In the several embodiments provided in this application, it should be understood that the disclosed system, device, and method may be implemented in another manner. For example, the described device embodiments are merely examples. For example, the unit division is merely logical function division. In actual implementation, there may be another division manner. For example, multiple units or components may be combined or integrated into another system, or some features may be ignored or not performed. On the other hand, the displayed or discussed mutual coupling or direct coupling or communication connection may be through some interfaces, indirect coupling or communication between devices or units, and may be in an electrical, mechanical, or other form.

The units described as separate parts may or may not be physically separate, and parts displayed as units may or may not be physical units, may be located in one place, or may be distributed on multiple network units. Some or all of the units may be selected according to an actual requirement to implement the objectives of the solutions in this embodiment.

In addition, functional units in the embodiments of this application may be integrated into one processing unit, or each unit may exist separately physically, or two or more units may be integrated into one unit.

The embodiments described above can be implemented entirely or partially through software, hardware, firmware, or any combination thereof. When implemented using software, they can be realized in the form of a computer program product, either partially or fully. The computer program product includes one or more computer instructions. When these computer program instructions are loaded and executed on a computer, they cause all or part of the processes or functions as described in the embodiments of this application to be carried out. The computer can be a general-purpose computer, a dedicated computer, a computer network, or any other programmable device. The computer instructions can be stored in a computer-readable storage medium, or transferred from one computer-readable storage medium to another. For example, the computer instructions can be transmitted from a website, computer, server, or data center to another website, computer, server, or data center via wired (such as coaxial cables, optical fibers, digital subscriber lines (DSL)) or wireless (such as infrared, wireless, microwave, etc.) methods. The computer-readable storage medium can be any available medium that a computer can read or a data storage device, such as a server or data center, that integrates one or more of these available media. The available media may include magnetic media (e.g., floppy disks, hard drives, magnetic tapes), optical media (e.g., digital versatile discs (DVDs)), or semiconductor media (e.g., solid-state drives (SSDs)), and so on.

The above-described embodiments are merely specific examples of the present application. However, the scope of the present application is not limited to these embodiments. Any variations or substitutions that would be obvious to those skilled in the art within the technical scope disclosed in this application should also fall within the scope of protection of this application. Therefore, the scope of protection of this application should be determined by the scope of the claims.

## Claims

1. A wireless communications method, comprising:
transmitting, by a first communications device, first information, wherein
a difference between a moment at which the first communications device receives a first positioning signal and a moment at which the first communications device sends a second positioning signal is a first time difference, a time advance TA corresponding to a time period for transmitting the first positioning signal is a first TA, a TA corresponding to a time period for transmitting the second positioning signal is a second TA, the first information is related to the first time difference, and the first information is further related to the first TA and/or the second TA.

2. The method according to claim 1, wherein the first time difference is determined based on the first TA and/or the second TA.

3. The method according to claim 2, wherein the first time difference is determined based on a difference between the first TA and the second TA.

4. The method according to claim 3, wherein the first time difference UE_{Tx-Rx} is calculated from UE_{Tx-Rx}=d+TA₂-TA₁, wherein a first subframe is an uplink subframe closest to the first positioning signal received by the first communications device, and a difference between a time at which the first communications device receives a first path of the first positioning signal and the first subframe is a second time difference, wherein d represents the second time difference, TA₂ represents the second TA, and TA₁ represents the first TA.

5. The method according to claim 1, wherein a difference between a time at which the first communications device receives a first path of the first positioning signal and a time at which the first communications device sends the second positioning signal is a third time difference, the third time difference is modulo a subframe length to obtain a first value, and the first time difference is determined according to the first value.

6. The method according to claim 5, wherein the first time difference UE_{Tx-Rx} is calculated from UE_{Tx-Rx}=Ts-mod(g, Ts), wherein g represents the third time difference, Ts represents the subframe length, and mod() represents modulo operation.

7. The method according to claim 1, wherein in calculating the first time difference, the time at which the first communications device receives the first positioning signal is adjusted to a first moment, the first moment is related to a first subframe and a second subframe, the first subframe is an uplink subframe closest to the first positioning signal received by the first communications device, and the second subframe is the subframe at which the first communications device sends the second positioning signal.

8. The method according to claim 7, wherein the first moment T1 meets T1 =T3+(*l-*j)*Ts, wherein T3 represents the time at which the first communications device receives a first path of the first positioning signal, j represents a serial number of the first subframe, *l* represents a serial number of the second subframe, and Ts represents a subframe length.

9. The method according to claim 1, wherein in calculating the first time difference, a time at which the first communications device sends the second positioning signal is adjusted to a second moment, the second moment is related to a first subframe and a second subframe, the first subframe is an uplink subframe closest to the first positioning signal received by the first communications device, and the second subframe is the subframe at which the first communications device sends the second positioning signal.

10. The method according to claim 9, wherein the second time T2 is calculated from T2 =T4-(*l*-j)*Ts, wherein T4 represents the time at which the first communications device sends the second positioning signal, j represents a serial number of the first subframe, *l* represents a serial number of the second subframe, and Ts represents a subframe length.

11. The method according to any one of claims 1 to 10, wherein the first information comprises the first TA and/or the second TA.

12. The method according to any one of claims 1 to 11, wherein the first information comprises a difference between the first TA and the second TA.

13. A wireless communications methods, comprising:
receiving, by a second communications device, first information transmitted by a first communications device, wherein
a difference between a moment at which the first communications device receives a first positioning signal and a moment at which the first communications device sends a second positioning signal is a first time difference, a time advance TA corresponding to a time period for transmitting the first positioning signal is a first TA, a TA corresponding to a time period for transmitting the second positioning signal is a second TA, the first information is related to the first time difference, and the first information is further related to the first TA and/or the second TA.

14. The method according to claim 13, wherein the first time difference is determined based on the first TA and/or the second TA.

15. The method according to claim 14, wherein the first time difference is determined based on a difference between the first TA and the second TA.

16. The method according to claim 15, wherein the first time difference UE_{Tx-Rx} is calculated from UE_{Tx-Rx}=d+TA₂-TA₁, wherein a first subframe is an uplink subframe closest to the first positioning signal received by the first communications device, and a difference between a time at which the first communications device receives a first path of the first positioning signal and the first subframe is a second time difference, wherein d represents the second time difference, TA₂ represents the second TA, and TA₁ represents the first TA.

17. The method according to claim 13, wherein a difference between a time at which the first communications device receives a first path of the first positioning signal and a time at which the first communications device sends the second positioning signal is a third time difference, the third time difference is modulo a subframe length to obtain a first value, and the first time difference is determined according to the first value.

18. The method according to claim 17, wherein the first time difference UE_{Tx-Rx} is calculated from UE_{Tx-Rx}=Ts-mod(g, Ts), wherein g represents the third time difference, Ts represents the subframe length, and mod() represents modulo operation.

19. The method according to claim 13, wherein in calculating the first time difference, the time at which the first communications device receives the first positioning signal is adjusted to a first moment, the first moment is related to a first subframe and a second subframe, the first subframe is an uplink subframe closest to the first positioning signal received by the first communications device, and the second subframe is the subframe at which the first communications device sends the second positioning signal.

20. The method according to claim 19, wherein the first moment T1 meets T1 =T3+(*l-*j)*Ts, wherein T3 represents the time at which the first communications device receives a first path of the first positioning signal, j represents a serial number of the first subframe, *l* represents a serial number of the second subframe, and Ts represents a subframe length.

21. The method according to claim 13, wherein in calculating the first time difference, a time at which the first communications device sends the second positioning signal is adjusted to a second moment, the second moment is related to a first subframe and a second subframe, the first subframe is an uplink subframe closest to the first positioning signal received by the first communications device, and the second subframe is the subframe at which the first communications device sends the second positioning signal.

22. The method according to claim 21, wherein the second time T2 is calculated from T2 =T4-(*l*-j)*Ts, wherein T4 represents the time at which the first communications device sends the second positioning signal, j represents a serial number of the first subframe, *l* represents a serial number of the second subframe, and Ts represents a subframe length.

23. The method according to any one of claims 13 to 22, wherein the first information comprises the first TA and/or the second TA.

24. The method according to any one of claims 13 to 23, wherein the first information comprises a difference between the first TA and the second TA.

25. A communications device, wherein the communications device is a first communications device, and the communications device comprises:
a sending unit, for sending first information, wherein
a difference between a moment at which the first communications device receives a first positioning signal and a moment at which the first communications device sends a second positioning signal is a first time difference, a time advance TA corresponding to a time period for transmitting the first positioning signal is a first TA, a TA corresponding to a time period for transmitting the second positioning signal is a second TA, the first information is related to the first time difference, and the first information is further related to the first TA and/or the second TA.

26. The device according to claim 25, wherein the first time difference is determined based on the first TA and/or the second TA.

27. The device according to claim 26, wherein the first time difference is determined based on a difference between the first TA and the second TA.

28. The device according to claim 27, wherein the first time difference UE_{Tx-Rx} is calculated from UE_{Tx-Rx}=d+TA₂-TA₁, wherein a first subframe is an uplink subframe closest to the first positioning signal received by the first communications device, and a difference between a time at which the first communications device receives a first path of the first positioning signal and the first subframe is a second time difference, wherein d represents the second time difference, TA₂ represents the second TA, and TA₁ represents the first TA.

29. The device according to claim 25, wherein a difference between a time at which the first communications device receives a first path of the first positioning signal and a time at which the first communications device sends the second positioning signal is a third time difference, the third time difference is modulo a subframe length to obtain a first value, and the first time difference is determined according to the first value.

30. The device according to claim 29, wherein the first time difference UE_{Tx-Rx} is calculated from UE_{Tx-Rx}=Ts-mod(g, Ts), wherein g represents the third time difference, Ts represents the subframe length, and mod() represents modulo operation.

31. The device according to claim 25, wherein in calculating the first time difference, the time at which the first communications device receives the first positioning signal is adjusted to a first moment, the first moment is related to a first subframe and a second subframe, the first subframe is an uplink subframe closest to the first positioning signal received by the first communications device, and the second subframe is the subframe at which the first communications device sends the second positioning signal.

32. The device according to claim 31, wherein the first moment T1 meets T1 =T3+(*l-*j)*Ts, wherein T3 represents the time at which the first communications device receives a first path of the first positioning signal, j represents a serial number of the first subframe, *l* represents a serial number of the second subframe, and Ts represents a subframe length.

33. The device according to claim 25, wherein in calculating the first time difference, a time at which the first communications device sends the second positioning signal is adjusted to a second moment, the second moment is related to a first subframe and a second subframe, the first subframe is an uplink subframe closest to the first positioning signal received by the first communications device, and the second subframe is the subframe at which the first communications device sends the second positioning signal.

34. The device according to claim 33, wherein the second time T2 is calculated from T2 =T4-(*l*-j)*Ts, wherein T4 represents the time at which the first communications device sends the second positioning signal, j represents a serial number of the first subframe, *l* represents a serial number of the second subframe, and Ts represents a subframe length.

35. The device according to any one of claims 25 to 34, wherein the first information comprises the first TA and/or the second TA.

36. The device according to any one of claims 25 to 35, wherein the first information comprises a difference between the first TA and the second TA.

37. A communications device, wherein the communications device is a second communications device, and the communications device comprises:
a receiving unit, for receiving first information sent by a first communications device, wherein
a difference between a moment at which the first communications device receives a first positioning signal and a moment at which the first communications device sends a second positioning signal is a first time difference, a time advance TA corresponding to a time period for transmitting the first positioning signal is a first TA, a TA corresponding to a time period for transmitting the second positioning signal is a second TA, the first information is related to the first time difference, and the first information is further related to the first TA and/or the second TA.

38. The device according to claim 37, wherein the first time difference is determined based on the first TA and/or the second TA.

39. The device according to claim 38, wherein the first time difference is determined based on a difference between the first TA and the second TA.

40. The device according to claim 39, wherein the first time difference UE_{Tx-Rx} is calculated from UE_{Tx-Rx}=d+TA₂-TA₁, wherein a first subframe is an uplink subframe closest to the first positioning signal received by the first communications device, and a difference between a time at which the first communications device receives a first path of the first positioning signal and the first subframe is a second time difference, wherein d represents the second time difference, TA₂ represents the second TA, and TA₁ represents the first TA.

41. The device according to claim 37, wherein a difference between a time at which the first communications device receives a first path of the first positioning signal and a time at which the first communications device sends the second positioning signal is a third time difference, the third time difference is modulo a subframe length to obtain a first value, and the first time difference is determined according to the first value.

42. The device according to claim 41, wherein the first time difference UE_{Tx-Rx} is calculated from UE_{Tx-Rx}=Ts-mod(g, Ts), wherein g represents the third time difference, Ts represents the subframe length, and mod() represents modulo operation.

43. The apparatus according to claim 37, wherein in calculating the first time difference, the time at which the first communications device receives the first positioning signal is adjusted to a first moment, the first moment is related to a first subframe and a second subframe, the first subframe is an uplink subframe closest to the first positioning signal received by the first communications device, and the second subframe is the subframe at which the first communications device sends the second positioning signal.

44. The device according to claim 43, wherein the first moment T1 meets T1 =T3+(*l-*j)*Ts, wherein T3 represents the time at which the first communications device receives a first path of the first positioning signal, j represents a serial number of the first subframe, *l* represents a serial number of the second subframe, and Ts represents a subframe length.

45. The device according to claim 37, wherein in calculating the first time difference, a time at which the first communications device sends the second positioning signal is adjusted to a second moment, the second moment is related to a first subframe and a second subframe, the first subframe is an uplink subframe closest to the first positioning signal received by the first communications device, and the second subframe is the subframe at which the first communications device sends the second positioning signal.

46. The device according to claim 45, wherein the second time T2 is calculated from T2 =T4-(*l*-j)*Ts, wherein T4 represents the time at which the first communications device sends the second positioning signal, j represents a serial number of the first subframe, *l* represents a serial number of the second subframe, and Ts represents a subframe length.

47. The device according to any one of claims 37 to 46, wherein the first information comprises the first TA and/or the second TA.

48. The device according to any one of claims 37 to 47, wherein the first information comprises a difference between the first TA and the second TA.

49. A communications device, comprising a memory and a processor, the memory being configured to store a program, and the processor being configured to invoke the program in the memory to cause the communications device to perform the method according to any one of claims 1 to 8.

50. A device, comprising a processor configured to invoke a program from a memory to cause the device to perform the method according to any one of claims 1 to 24.

51. A chip, comprising a processor configured to invoke a program from a memory to cause a device equipped with the chip to perform the method according to any one of claims 1 to 24.

52. A computer-readable storage medium having a program stored thereon, the program causing a computer to perform the method according to any one of claims 1 to 24.

53. A computer program product, comprising a program causing a computer to perform the method according to any one of claims 1 to 24.

54. A computer program, causing a computer to perform the method according to any one of claims 1 to 24.
